# EUROPEAN PATENT APPLICATION

(11) **EP 4 725 803 A1**
(43) Date of publication of application: **15.04.2026**
(21) Application number: 24205809.7
(22) Date of filing: 10.10.2024
(51) Int. Cl.: B62D 21/14

(54) **RETRACTABLE CHASSIS FOR VEHICLE**

(71) Applicant: NTDD New Digital Diesel Technology, S.L, 31500 Tudela (ES)
(72) Inventor: ARRONDO GIL, Ricardo, Tudela (ES)
(74) Representative: Isern Patentes y Marcas S.L.

(57) **Abstract**

The present invention provides a retractable chassis for vehicle that comprises a front sub-chassis suitable for carrying the front wheels and a rear sub-chassis suitable for carrying the rear wheels, wherein the front sub-chassis and the rear sub-chassis are connected to each other telescopically such that they are enabled to move relative to each other between an extended position and a retracted position. Locking means configured to block the movement of the sub-chassis in the extended position are provided. The rear sub-chassis comprises safety bolts configured to engage in the locking means so as to block a transition between the extended position and the retracted position.

## Description

### Technical field of the invention

The present invention relates to a vehicle chassis that comprises at least two bodies that move relative to each other so that the user can vary the length of the chassis to adapt it to their needs.

### State of the art

In the field of automotive design, several technologies have been developed to allow the chassis of a vehicle to be lengthened, thus improving its versatility and ability to adapt to different environments and situations of use.

One of the most relevant technologies in this context is that of pivoting bodies or folding chassis. This system allows certain sections of the vehicle chassis to fold or rotate about an axis, varying the length and height of the vehicle chassis when a smaller space is required, such as in urban areas with space restrictions. These designs include hinge and joint mechanisms that allow the chassis to bend efficiently without compromising the structural integrity of the vehicle. This technology not only makes parking in small spaces easier, but also allows for more compact storage of vehicles when not in use.

Pivoting bodies offer innovative solutions for modifying the dimensions of a vehicle chassis based on the user's needs. However, these technologies also face specific challenges.

Pivoting bodies require a robust hinge design that withstands weight and mechanical stresses during folding and unfolding, and these links have a high failure rate after certain load cycles. Furthermore, when using hinge or joint systems, the height increases as the length of the structure decreases, thereby complicating the assembly of vehicle bodies on top of said structure.

Therefore, there is a need to provide a chassis of varying dimensions that is robust against cyclic loads and maintains its height as the length varies.

### DESCRIPTION

To respond to the detected need, the present invention provides a retractable chassis for vehicle as disclosed in claim 1.

Preferred embodiments of said device are set forth in the claims dependent on claim 1.

As is known, pivoting bodies are currently used to vary the length of vehicle chassis. The present invention provides a retractable chassis that uses telescopic extension technology to increase and decrease the length of the chassis.

Thus, the retractable vehicle chassis of the present invention comprises a front sub-chassis suitable for carrying the front wheels and a rear sub-chassis suitable for carrying the rear wheels. The front sub-chassis and the rear sub-chassis are connected to each other telescopically such that they are enabled to move relative to each other between an extended position and a retracted position.

In this sense, forming a telescopic link between the front sub-chassis and the rear sub-chassis provides several advantages over the current state of the art. Firstly, this type of link is more robust than the pivoting links under cyclic loads. Secondly, since it involves linear movement of the chassis, the height of the chassis does not vary between the extended position and the retracted position, which allows for mounting on the same body, which height does not vary either, for example, bodies that overlap to create an enclosed casing in both positions. Another solution for adapting to the varying length of the chassis would be an accordion-type body.

In one embodiment, the retractable chassis comprises locking means intended to prevent or block the movement of the sub-chassis in the extended position. If it is in the extended position, an uncontrolled transition to the retracted position could cause serious damage to the interior of the vehicle body mounted on the chassis. These locking means are a safety measure to prevent the unwanted reduction in length of the retractable chassis. More preferably, the rear sub-chassis comprises safety bolts which are configured to engage in the locking means. By engaging the safety bolts in the locking means, a transition between the extended position and the retracted position is blocked. There are many possible mechanical solutions that the locking means could adopt; however, in the present invention, the decision has been made to include bolts in the rear sub-chassis, which, in the extended position, couple with the locking means and where said locking means are configured to prevent an uncontrolled transition between the extended position and the retracted position. On the one hand, the movement of the sub-chassis relative to each other is used to perform the blocking without calculating the distance covered between the sub-chassis to perform the locking. In addition, functionality is added to the rear sub-chassis by incorporating the safety bolts. Lastly, the operation of the mechanism between the safety bolt and locking means is simple and robust, allowing for the easy incorporation thereof into the structure and the durability thereof.

In another embodiment, the front sub-chassis comprises four tubular housings parallel to each other and the rear sub-chassis comprises four rods parallel to each other configured to be housed in the tubular housings. The use of tubular shapes has several advantages: firstly, tubular sections (e.g., circular, elliptical) provide continuous surfaces without vertices which minimises friction and wear because it ensures constant contact pressure along the entire surface during movement. In addition, the tubular sections offer advantages over bending stresses on all axes contained in the plane with a minimum cross-section, and they also better resist torsion and compression and optimise the weight-to-strength ratio. On the other hand, it has been found that the use of four telescopic elements, i.e., four pairs of circular housing coupled with a rod, is the number that optimises the ratio of weight to stress support. More preferably, the tubular housings are oriented towards a forward direction of the vehicle. This arrangement of the tubular housings allows the chassis to increase its length in a forward direction of the vehicle. Even more preferably, the tubular housings comprise a friction plastic which is arranged inside each tubular housing for the sliding of each rod. Friction plastics in telescopic mechanisms offer advantages including low friction between moving members, increased wear resistance, reduced weight, absorption of high loads, resistance to high duty cycles, and protection against corrosion. All of this improves durability and efficiency in repetitive movements.

In another embodiment, the retractable chassis comprises an actuator operatively connected to the front sub-chassis and the rear sub-chassis configured to move the front sub-chassis and the rear sub-chassis between the extended and retracted positions. The actuator, together with the front and rear sub-chassis configuration, gives the retractable chassis the ability to move between the extended and retracted positions.

### Brief description of the figures

The foregoing and other advantages and features will be more fully understood from the following detailed description of exemplary embodiments with reference to the accompanying drawings, which should be considered by way of illustration and not limitation, wherein:
- Fig. 1 is a perspective view of the retractable chassis in the extended position.
- Fig. 2 is a cross-sectional view of the telescopic link between a tubular housing and a rod.
- Fig. 3 is a perspective view of a safety lock of the telescopic link.

### Detailed description of an exemplary embodiment

In the following detailed description, numerous specific details are set forth in the form of examples to provide a thorough understanding of the relevant teachings. However, it will be apparent to those skilled in the art that the present teachings can be implemented without such details.

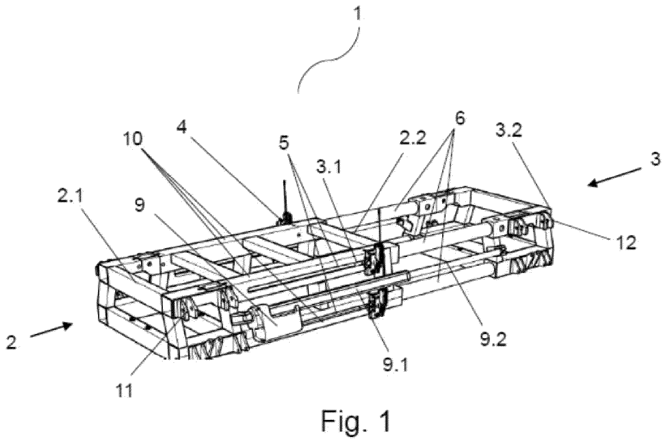

As shown in figure 1, the present invention provides a retractable chassis (1) configured to move between two positions, an extended position and a retracted position, such that the length of the retractable chassis (1) varies between a minimum and a maximum. In the embodiment shown in figure 1, the retractable chassis (1) is shown in the extended position with its maximum length. The retractable chassis (1) is configured to adopt these positions by means of the telescopic coupling of a front sub-chassis (2) and a rear sub-chassis (3) which define a substantially prismatic-rectangular structure.

The retractable chassis (1), as shown in figure 1, comprises the front sub-chassis (2) which defines a first end plane (2.1) and a second end plane (2.2). Two front wheel links (11) extend from the first end plane (2.1) to the second end plane (2.2) on the front sub-chassis (2) so that it is enabled to couple two front wheels. The front sub-chassis (2) further comprises four beams (10) within which four circular housings (5) are located, and two sides of the circular housings (5) are shown in figure 1. The four circular housings (5) extend from the second end plane (2.2) to the first end plane (2.1). Lastly, the front sub-chassis (2) comprises four locking means (4) that are located close to the second end plane (2.2).

Furthermore, as shown in figure 1, the retractable chassis (1) comprises the rear sub-chassis (3) which defines a first end plane (3.1) and a second end plane (3.2). Two rear wheel links (12) extend from the second end plane (3.2) to the first end plane (3.1) on the rear sub-chassis (3) so that it is enabled to couple two rear wheels. The rear sub-chassis (3) further comprises four rods (6) configured to engage and slide into the four tubular housings (5) so that all the rods (6) are housed in all the tubular housings (5). In order to achieve relative movement between the front and rear sub-chassis (2, 3), an actuator (9) (e.g., hydraulic) is coupled thereto, said actuator (9) comprising a cylinder (9.1) coupled to the front sub-chassis (2) and a piston (9.2) housed inside the cylinder (9.1), where one end of the piston (9.2) is coupled to the rear sub-chassis (3). In this way, when the piston (9.2) makes a relative movement with respect to the cylinder (9.1), the front sub-chassis (2) and the rear sub-chassis (3) also move the same distance relative to each other.

As previously mentioned, figure 1 shows the retractable chassis (1) in the extended position. In this extended position, a predetermined portion of each of the four rods (6) remains housed in their respective tubular housings (5) in order to keep the front sub-chassis (2) and the rear sub-chassis (3) together during use as a vehicle (e.g., on the road) in compliance with the relevant structural requirements.

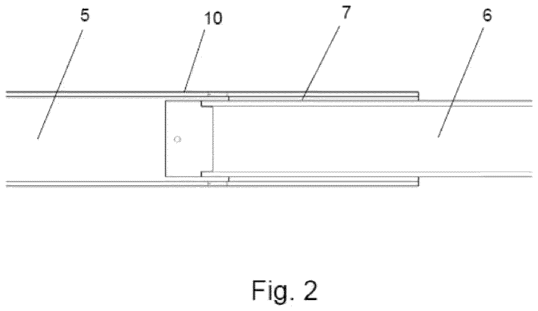

Figure 2 shows a cross-section of one of the four telescopic connections between a rod (6) and a beam (10). The connection between the rod (6) and the beam (10) further comprises a friction plastic (7) which gives the telescopic connection good structural properties against wear, stress and fatigue.

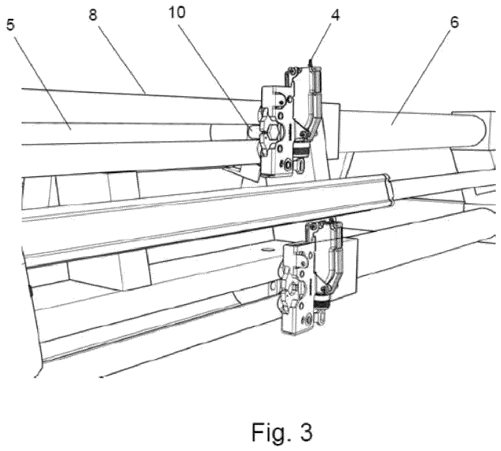

Figure 3 shows one locking means (4) of the four locking means (4) in total. It also shows one safety bolt (8) of the four safety bolts (8) in total. Each beam (10) comprises a locking means (4) and each rod (6) comprises a safety bolt (8). The locking means (4) is configured to house and enclose the safety bolt (8) so that uncontrolled relative movement between the front sub-chassis (2) and the rear sub-chassis (3) is prevented when the retractable chassis (1) is in the extended position.

## Claims

1. A retractable chassis (1) for vehicle that comprises a front sub-chassis (2) suitable for carrying the front wheels and a rear sub-chassis (3) suitable for carrying the rear wheels, wherein the front sub-chassis (2) and the rear sub-chassis (3) are connected to each other telescopically such that they are enabled to move relative to each other between an extended position and a retracted position.

2. The retractable chassis (1) of claim 1, comprising locking means (4) configured to block the movement of the sub-chassis (2, 3) in the extended position.

3. The retractable chassis (1) according to claim 2, wherein the rear sub-chassis (3) comprises safety bolts (8) configured to engage in the locking means (4) so as to block a transition between the extended position and the retracted position.

4. The retractable chassis (1) according to any of the preceding claims, wherein the front sub-chassis (2) comprises four tubular housings (5) parallel to each other and the rear sub-chassis (3) comprises four rods (6) parallel to each other suitable for being housed in the tubular housings (5).

5. The retractable chassis (1) according to claim 4, wherein the tubular housings (5) are oriented towards a forward direction of the vehicle.

6. The retractable chassis (1) according to claim 5, wherein the tubular housings (5) comprise a friction plastic (7) arranged inside each tubular housing (5) for the sliding of each rod (6).

7. The retractable chassis (1) according to any of the preceding claims, comprising an actuator (9) operatively connected to the sub-chassis (2, 3) configured to move the sub-chassis (2, 3) between the extended position and the retracted position.
